# DEMANDE DE BREVET EUROPEEN

(11) **EP 4 825 468 A1**
(43) Date de publication de la demande: **21.10.2026**
(21) Numéro de dépôt: 26172063.5
(22) Date de dépôt: 13.04.2026
(51) Int. Cl.: B01D 53/04

(54) **CARTOUCHE D'ABSORPTION DE VAPEURS TOXIQUES**

(30) Priorité: 11.04.2025 FR 2503889
(71) Demandeur: Aznar, Pascal, 78110 Le Vésinet (FR)
(72) Inventeur: Aznar, Pascal, 78110 Le Vésinet (FR)
(74) Mandataire: den Braber, Gérard Paul

(57) **Abrégé**

Une cartouche d'absorption de vapeurs toxiques (800) comprend un assemblage d'un module de base (801) et d'au moins un module complémentaire (802, 803, 804). Chaque module de cet assemblage comprend une paroi circonférentielle délimitant un compartiment interne (805, 806, 807, 808) contenant un matériau absorbant. Ces modules (801, 802, 803, 804) sont assemblés par la fixation de leurs parois circonférentielles respectives les unes aux autres. Le module de base (801) comprend des moyens de montage sur un évent d'un contenant.

## Description

### DOMAINE TECHNIQUE

Un aspect de l'invention concerne une cartouche d'absorption de vapeurs toxiques. Une telle cartouche peut être montée sur un évent d'un contenant destiné à collecter des effluents susceptibles de dégager des vapeurs toxiques. La cartouche d'absorption de vapeurs toxiques peut ainsi être utilisée, par exemple, dans de nombreux types de laboratoires, notamment des laboratoires d'analyse chimique et des laboratoires d'analyse biochimique. D'autres aspects de l'invention concernent un équipement pour collecter des effluents susceptibles de dégager des vapeurs toxiques et un usage d'une cartouche d'absorption de vapeurs toxiques dans une telle collecte.

### ARRIÈRE-PLAN TECHNIQUE

Dans un laboratoire d'analyse chimique ou biochimique, il est d'usage de récupérer des solvants organo-aqueux, organiques ou encore inorganiques usagés dans un contenant qui peut-être une bouteille, un bidon ou encore un fût. Ces contenants peuvent recevoir régulièrement ces effluents organiques de manière continue, drainées par une série de tuyaux qui peuvent avoir de divers diamètres.

Ces effluents proviennent principalement des instrumentations d'analyses chimique ou biochimique. Le contenant est généralement placé à proximité d'une instrumentation pour éviter d'avoir une tuyauterie inutilement longue et peu pratique.

Initialement, le contenant restait incomplètement étanche aux vapeurs d'effluents toxiques pour laisser passer l'arrivée des tuyaux des effluents. Les vapeurs toxiques de solvants s'échappaient et venaient contaminer les pièces du laboratoire. Celle-ci étaient inhalées par les laborantins présents, affectant à long terme la santé du personnel présent dans le laboratoire.

Pour pallier ce grave problème de santé, on a équipé les contenants d'un bouchon hermétique accueillant les tuyaux d'effluents. Ce fut un progrès, cependant l'arrivée de volume d'effluent venait augmenter la pression interne du contenant au risque d'un éclatement de celui-ci. Ou encore, quand le bouchon était dévissé, il libérait d'un coup dans le laboratoire toute la surpression de vapeurs d'effluents toxiques emmagasinées.

Pour remédier à ce problème, il fut créé un évent pour relâcher progressivement la pression. Cet évent a été équipé d'une cartouche unique de charbon actif absorbant ainsi certains types de vapeurs toxiques d'effluents organiques. Les cartouches décrites dans la littérature ou dans les brochures commerciales sont composés d'un seul réservoir où le charbon actif est maintenue par deux plaques frittées poreuses à chaque extrémité.

La publication de brevet US5997824A décrit un dispositif d'adsorption dans lequel plusieurs couches de matériaux adsorbants catalytiques sont disposées afin de traiter un gaz par des moyens physiques et chimiques. Le gaz est acheminé de manière ordonnée depuis la partie inférieure des matériaux adsorbants catalytiques jusqu'à la partie supérieure. En fonction de la différence de pression entre le gaz entrant et le gaz sortant, ou de la densité des composants nocifs présents dans le gaz sortant, le gaz est acheminé de manière à traverser les couches suivantes de matériaux adsorbants catalytiques.

### EXPOSÉ DE L'INVENTION

Il existe un besoin pour une solution plus efficace et économique pour empêcher des vapeurs toxiques dégagées par des effluents collectés dans un contenant de s'échapper à l'air libre.

L'invention prend en considération les aspects suivants. Il existe sur le marché trois types de cartouches de charbon actif. Un premier type de cartouches contient du charbon actif sans imprégnation pour absorber des vapeurs organo-aqueuses. Un deuxième type de cartouches contient du charbon actif on actif imprégnées de potasse (KOH) pour absorber des vapeurs acides. Un troisième type de cartouches contient du charbon actif imprégné d'acide sulfurique (H₂SO₄) pour absorber des vapeurs basiques.

Cependant, il faut actuellement choisir entre l'un de ces trois types de charbon actif lorsqu'on achète une cartouche. En effet, si on décide d'équiper un évent d'une cartouche de charbon actif sans imprégnation, les vapeurs acides ainsi que les vapeurs basiques ne seront que très partiellement absorbées. Si l'évent est équipé d'une cartouche imprégnée de potasse, alors les vapeurs acides seront relativement efficacement absorbées, les vapeurs acides ne seront quasiment pas absorbées et les vapeurs organo-aqueuses avec une efficacité réduite. Si l'évent est équipé d'une cartouche imprégnée d'acide sulfurique, alors les vapeurs basiques seront relativement efficacement absorbées, les vapeurs acides ne seront quasiment pas absorbées et les vapeurs organo-aqueuses avec une efficacité réduite.

Les cartouches de l'état de la technique présentent l'inconvénient de recevoir un seul type de charbon actif. De plus, elles se limitent également à un volume déterminé pour chaque modèle de cartouche. Le volume de charbon actif dans la cartouche, déterminera le temps d'utilisation de celle-ci selon les usages que l'on fera.

Un aspect de l'invention prévoit en une cartouche d'absorption de vapeurs toxiques configurée pour être monté sur un évent d'un contenant destiné à collecter des effluents susceptibles de dégager des vapeurs toxiques, caractérisé en ce que la cartouche d'absorption de vapeurs toxiques comprend un ensemble de modules respectifs assemblables incorporant des compartiments respectifs contenant un matériau absorbant apte à absorber au moins une partie des vapeurs toxiques, l'ensemble comprenant un module de base configuré pour être monté sur l'évent du contenant et au moins un module complémentaire configuré pour être monté sur le module de base.

Plus spécifiquement, cet aspect de l'invention prévoit en une cartouche d'absorption telle que définie à la revendication 1.

Un autre aspect de l'invention prévoit en un équipement pour collecter des effluents susceptibles de dégager des vapeurs toxiques, l'équipement comprenant un contenant dans lequel les effluents peuvent s'écouler et une cartouche d'absorption de vapeurs toxiques telle que définie à la revendication 1.

Encore un autre aspect de l'invention prévoit en un usage d'une cartouche d'absorption de vapeurs toxiques telle que définie à la revendication 1, consistant à monter la cartouche d'absorption de vapeurs toxiques sur un évent d'un contenant destiné à collecter des effluents susceptibles de dégager des vapeurs toxiques.

L'invention permet d'obtenir rapidement et économiquement une cartouche absorbante spécifiquement adaptée à une mise en œuvre particulière de collecte d'effluents. Il suffit à un fournisseur de cartouches d'assembler des modules contenant collectivement une quantité suffisante de matériaux absorbants pour absorber les vapeurs toxiques qui seront libérées tout au long de la collecte d'effluents. L'assemblage peut être réalisé de manière à ce que la cartouche comprenne un type de matériau absorbant ou, le cas échéant, un mélange de matériaux absorbants absorbant efficacement les vapeurs toxiques émises. Suite à une demande spécifique d'un utilisateur, le fournisseur de cartouches peut alors livrer rapidement une cartouche répondant à ses besoins et à un prix attractif grâce à la modularité offerte par l'invention.

L'invention se distingue du dispositif d'adsorption de gaz pour un usage industriel divulgué dans la publication de brevet précitée. Ce dispositif contient des couches de matériau absorbant catalytique. Cependant, la structure de ce dispositif est fondamentalement différente de celle de la présente invention. En effet, le dispositif connu utilise des éléments de séparation, appelés « cartridges », qui fonctionnent comme des cadres ouverts ou des squelettes. Ces cadres ne contiennent pas le matériau absorbant, mais servent à séparer des couches de ce matériau empilées à l'intérieur d'un boîtier cylindrique monolithique. C'est ce boîtier qui assure la cohésion de l'ensemble des couches avec les éléments de séparation et le confinement latéral du matériau absorbant.

À l'inverse, dans la présente invention, chaque module est conçu comme un conteneur autonome pourvu d'une paroi circonférentielle qui délimite un compartiment interne destiné à contenir le matériau absorbant. De plus, l'assemblage est obtenu par la fixation des modules les uns aux autres, typiquement par couplage de leurs parois circonférentielles, et ne requiert pas de boîtier externe pour assurer sa structure et son confinement. Cette architecture permet d'obtenir une cartouche légère, autoportante et facilement manipulable, ce qui la rend particulièrement adaptée à un usage en laboratoire, contrairement au dispositif lourd et fixe divulgué dans la publication de brevet précitée.

À des fins d'illustration, quelques modes de réalisation de l'invention sont décrits en détail en référence aux dessins annexés. Cette description fera apparaître des caractéristiques complémentaires à celles mentionnées dans ce qui précède, ainsi que des avantages que ces caractéristiques complémentaires peuvent apporter.

### DESCRIPTION SOMMAIRE DES DESSINS

La figure 1 est une vue schématique en perspective d'un équipement pour collecter des effluents susceptibles de dégager des vapeurs toxiques.
La figure 2 est une vue schématique en perspective d'un premier mode de réalisation d'une cartouche d'absorption de vapeurs toxiques pour utilisation dans un équipement tel que celui illustré à la figure 1.
La figure 3 est une vue schématique de côté du premier mode de réalisation de la cartouche d'absorption de vapeurs toxiques.
La figure 4 est une vue schématique en coupe du premier mode de réalisation de la cartouche d'absorption de vapeurs toxiques.
La figure 5 est une vue schématique en perspective d'un deuxième mode de réalisation d'une cartouche d'absorption de vapeurs toxiques pour utilisation dans un équipement tel que celui illustré à la figure 1.
La figure 6 est une vue schématique de côté éclatée du deuxième mode de réalisation de la cartouche d'absorption de vapeurs toxiques.
La figure 7 est une vue schématique en coupe éclatée du deuxième mode de réalisation de la cartouche d'absorption de vapeurs toxiques.
La figure 8 est une vue schématique en perspective d'un troisième mode de réalisation d'une cartouche d'absorption de vapeurs toxiques pour utilisation dans un équipement tel que celui illustré à la figure 1.
La figure 9 est une vue schématique de côté du troisième mode de réalisation de la cartouche d'absorption de vapeurs toxiques.
La figure 10 est une vue schématique en coupe du troisième mode de réalisation de la cartouche d'absorption de vapeurs toxiques.

### DESCRIPTION DE QUELQUES MODES DE REALISATION

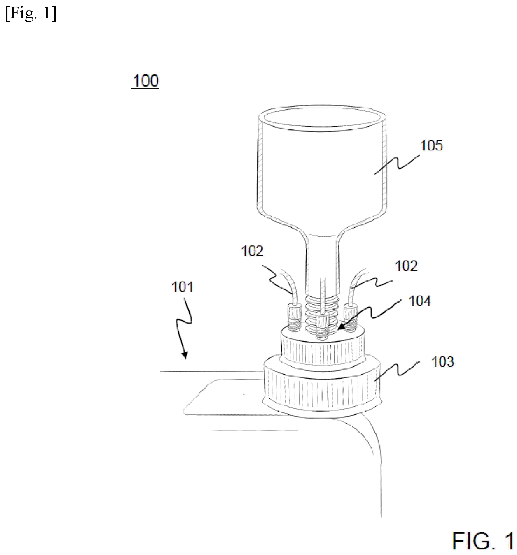

La figure 1 illustre schématiquement un équipement 100 pour collecter des effluents susceptibles de dégager des vapeurs toxiques. La figure 1 présente une vue schématique en perspective de cet équipement 100 qui sera nommé équipement de collecte 100 pour faciliter la lecture. L'équipement de collecte 100 peut être utilisé, par exemple, dans de nombreux types de laboratoires, notamment des laboratoires d'analyse chimique et des laboratoires d'analyse biochimique. Dans ces types de laboratoires, les effluents à collecter proviennent principalement des instrumentations d'analyses chimique ou biochimique.

L'équipement de collecte 100 comprend un contenant 101 dans lequel les effluents peuvent s'écouler ainsi que des tuyaux 102 par lesquelles les effluents peuvent s'écouler dans le contenant 101. Plus spécifiquement, dans ce mode de réalisation, le contenant 101 comprend un bouchon 103 accueillant les tuyaux 102 d'effluents de manière hermétique afin d'éviter que des vapeurs toxiques s'échappent à l'air libre. Le bouchon 103 est pourvu d'un évent 104 pour empêcher la création d'une pression excessive à l'intérieur du contenant 101 en raison de la vaporisation des effluents collectés.

L'équipement de collecte 100 comprend une cartouche d'absorption de vapeurs toxiques 105 montée sur l'évent 104 du bouchon 103 du contenant 101. Cette cartouche 105 sera nommée cartouche d'absorption 105 dans ce qui suit pour faciliter la lecture. La cartouche d'absorption 105 peut-être montée sur l'évent 104 par vissage ou tout autre moyen adapté. La cartouche d'absorption 105 comprend du charbon actif. Le charbon actif absorbe au moins une partie des vapeurs toxiques dégagées par les effluents collectés qui cherchent à s'échapper à l'air libre par l'évent 104.

Le charbon actif dans la cartouche d'absorption 105 peut être un des trois types de charbon actif suivants. Le charbon actif peut être imprégné d'une substance basique afin d'absorber efficacement des vapeurs toxiques acides, qui peuvent être organiques et inorganiques. Ce type de charbon actif sera ci-après désigné charbon actif basique pour faciliter la lecture. Alternativement, le charbon actif peut être imprégné d'une substance acide afin d'absorber efficacement des vapeurs toxiques basiques, qui peuvent être organiques et inorganiques. Ce type de charbon actif sera ci-après désigné charbon actif acide pour faciliter la lecture. Encore alternativement, le charbon actif ne peut avoir aucune imprégnation significative afin d'absorber efficacement des vapeurs organo-aqueuses, ainsi que des vapeurs de solvants organiques. Ce type de charbon actif sera ci-après désigné charbon actif neutre pour faciliter la lecture.

Un utilisateur doit actuellement choisir la cartouche d'absorption 105 parmi une collection de cartouches d'absorption dont chacune contient un type de charbon actif unique. En effet, si l'utilisateur choisi une cartouche contenant du charbon actif neutre, les vapeurs organo-aqueuses seront relativement efficacement absorbées, tandis que les vapeurs acides ainsi que les vapeurs basiques ne seront que très partiellement absorbées. Si l'utilisateur choisi une cartouche contenant du charbon actif basique, alors les vapeurs acides seront relativement efficacement absorbées, tandis que les vapeurs acides ne seront quasiment pas absorbées et les vapeurs organo-aqueuses avec une efficacité réduite. Si l'utilisateur choisi une cartouche contenant du charbon actif acide, alors les vapeurs basiques seront relativement efficacement absorbées, tandis que les vapeurs acides ne seront quasiment pas absorbées et les vapeurs organo-aqueuses avec une efficacité réduite.

L'utilisateur est donc contraint de choisir la cartouche d'absorption 105 la mieux adaptée au vu des effluents qu'il souhaite collecter dans le contenant 101. De plus, la cartouche d'absorption 105 doit être choisi de sorte que celle-ci reste suffisamment efficace au cours de la collecte des effluents, jusqu'à ce que le conteneur soit suffisamment rempli. Plus précisément, la quantité de charbon actif dans la cartouche doit être suffisante pour absorber la quantité des vapeurs toxiques qui se dégagent des effluents collectés dans le conteneur. En règle générale, plus le contenant 101 est volumineux, plus importante sera la quantité de charbon actif que la cartouche doit contenir et, par conséquent, plus la taille de la cartouche sera importante. Un fournisseur de cartouches d'absorption devrait donc avoir en stock une large palette de cartouches d'absorption de divers types de charbon actif et de diverses capacités d'absorption, c'est-à-dire, de diverses tailles.

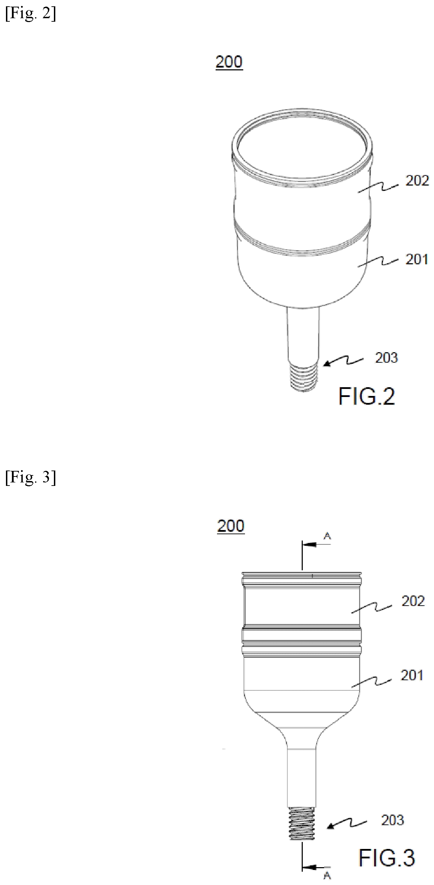

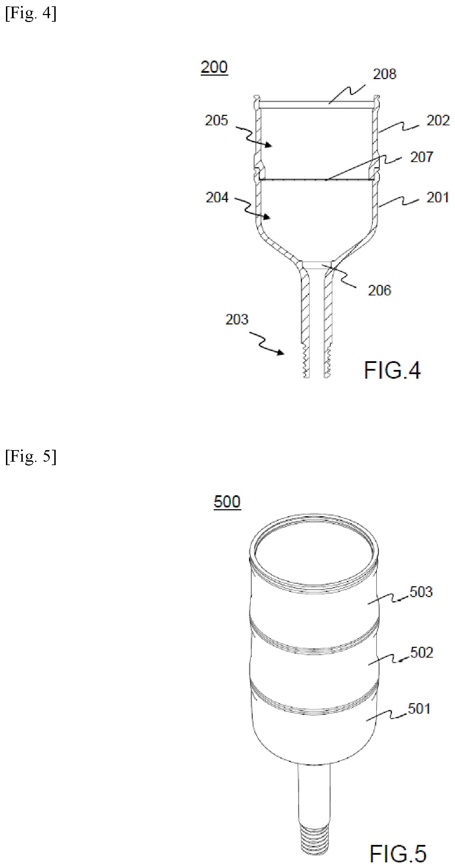

La figure 2, la figure 3, et la figure 4, illustrent schématiquement un premier mode de réalisation 200 d'une cartouche d'absorption de vapeurs toxiques pouvant se substituer à la cartouche d'absorption 105 dans l'équipement de collecte 100 illustré à la figure 1. La figure 2 présente une vue schématique en perspective de ce premier mode de réalisation 200 qui sera nommé première cartouche évoluée 200 dans ce qui suit pour faciliter la lecture. La figure 3 présente une vue schématique de côté de la première cartouche évoluée 200. La figure 4 présente une vue schématique en coupe de la première cartouche évoluée 200.

La première cartouche évoluée 200 comprend un ensemble de deux modules : un module de base 201 et un module complémentaire 202. Le module de base 201 est configuré pour être monté sur l'évent 104 du contenant 101 illustré à la figure 1. Dans ce mode de réalisation, le module de base 201 comprend une extrémité 203 prévue d'un pas de vis pour un montage pas vissage. Le module complémentaire 202 est monté sur le module de base 201. Dans ce mode de réalisation, ce montage consiste en un emboitage. Le module complémentaire 202 est maintenu sur le module de base 201 par encliquetage.

La première cartouche évoluée 200 comprend deux compartiments 204, 205. Chaque compartiment est délimité par la paroi circonférentielle du module qui l'incorpore. Le module de base 201 incorpore un premier compartiment 204. Le module complémentaire 202 incorpore un second compartiment 205. Le premier compartiment 204 est délimité par une barrière poreuse inférieure 206 et une barrière poreuse intermédiaire 207. La barrière poreuse inférieure 206 se situe dans une partie inférieure du module de base 201 relativement proche de son extrémité 203 montable sur l'évent 104 du contenant 101 illustré à la figure 1. La barrière poreuse intermédiaire 207 se situe dans une partie supérieure du module de base 201 sur laquelle le module complémentaire 202 est monté. Le second compartiment 205 est délimité par la barrière poreuse intermédiaire 207 et une barrière poreuse supérieure 208. La barrière poreuse supérieure 208 se situe dans une partie supérieure du module complémentaire 202 relativement éloignée du module de base 201.

Chacun des deux compartiments 204, 205 peut contenir un matériau absorbant apte à absorber au moins une partie des vapeurs toxiques. Ce matériau absorbant n'est pas représenté à la figure 4 par souci de simplicité et clarté. Le matériau absorbant peut comprendre du charbon actif, comme dans cartouche d'absorption 105 illustrée à la figure 1. Le charbon actif peut être un des trois types de charbon actif mentionné dans ce qui précède : un charbon actif acide, un charbon actif basique, ou un charbon actif neutre. Les deux compartiments 204, 205 peuvent comprendre le même type de charbon actif. Il est également possible que l'un et l'autre comprennent des types de charbon actif différents. Cela permet une grande flexibilité quant au charbon actif contenu dans la première cartouche évoluée 200.

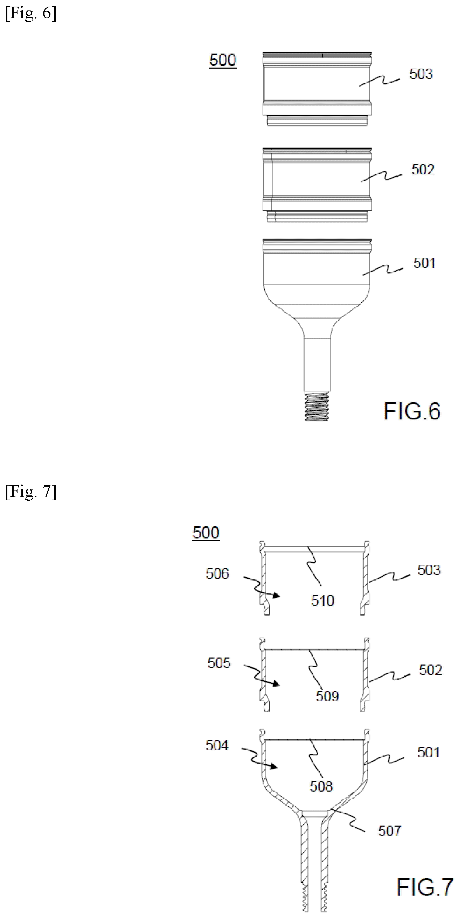

La figure 5, la figure 6, et la figure 7, illustrent schématiquement un deuxième mode de réalisation 500 d'une cartouche d'absorption de vapeurs toxiques pouvant se substituer à la cartouche d'absorption 105 dans l'équipement de collecte 100 illustré à la figure 1. La figure 5 présente une vue schématique en perspective de ce deuxième mode de réalisation 500 qui sera nommé deuxième cartouche évoluée 500 dans ce qui suit pour faciliter la lecture. La figure 6 présente une vue schématique de côté éclatée de la deuxième cartouche évoluée 500. La figure 7 présente une vue schématique en coupe éclatée de la deuxième cartouche évoluée 500.

La deuxième cartouche évoluée 500 comprend un ensemble de trois modules : un module de base 501 et deux modules complémentaires : un premier module complémentaire 502 et un second module complémentaire 503. Le module de base 501 peut être similaire, voire identique, au module de base 201 de la première cartouche évoluée 200. Les remarques faites précédemment concernant ce dernier module de base 201 peuvent donc également s'appliquer à ce mode de réalisation. Le premier module complémentaire 502 peut être monté sur le module de base 501 par fixation de sa paroi circonférentielle à celle du module de base. Le second module complémentaire 503 peut être monté sur le premier module complémentaire 502 également de cette manière. Mis à part son positionnement, le second module complémentaire 503 peut être similaire, voire identique, au module complémentaire 202 de la première cartouche évoluée 200.

La deuxième cartouche évoluée 500 comprend trois compartiments 504, 505, 506, Le module de base 501 incorpore un premier compartiment 504. Le premier module complémentaire 502 incorpore un deuxième compartiment 505. Le second module complémentaire 503 incorpore un troisième compartiment 506. Le premier compartiment 504 est délimité par une barrière poreuse inférieure 507 et une première barrière poreuse intermédiaire 508. Ces barrières poreuses 506, 507 peuvent être respectivement disposées de la même manière que la barrière poreuse inférieure 206 et la barrière poreuse intermédiaire 207 dans la première cartouche évoluée 200. Le deuxième compartiment 505 est délimité par la première barrière poreuse intermédiaire 508 et une deuxième barrière poreuse intermédiaire 509. La deuxième barrière poreuse intermédiaire 509 se situe dans une partie supérieure du premier module complémentaire 502 dans laquelle le second module complémentaire 503 s'emboîte. Le troisième compartiment 506 est délimité par la deuxième barrière poreuse intermédiaire 509 et une barrière poreuse supérieure 510. La barrière poreuse supérieure 510 se situe dans une partie supérieure du second module complémentaire 503 relativement éloignée du module de base 501. À cet égard également, le second module complémentaire 503 peut donc être similaire au module complémentaire 202 dans la première cartouche évoluée 200, comme mentionné dans ce qui précède.

Chacun des trois compartiments 504, 505, 506 peut contenir un matériau absorbant apte à absorber au moins une partie des vapeurs toxiques. Comme à la figure 4, ce matériau absorbant n'est pas représenté non plus à la figure 7 par souci de simplicité et clarté. Le matériau absorbant peut comprendre du charbon actif, comme dans la première cartouche évoluée 200. Les remarques faites dans ce qui précède concernant la première cartouche évoluée 200 s'appliquent également. Les trois compartiments 504, 505, 506 peuvent comprendre le même type de charbon actif. Il est également possible que chaque compartiment comprenne un type de charbon actif différent, ou que deux des trois compartiments 504, 505, 506 comprennent le même type de charbon actif tandis que l'autre compartiment comprend type de charbon actif différent. De nombreuses permutations sont possibles ce qui permet une grande flexibilité quant au charbon actif contenu dans la deuxième cartouche évoluée 500.

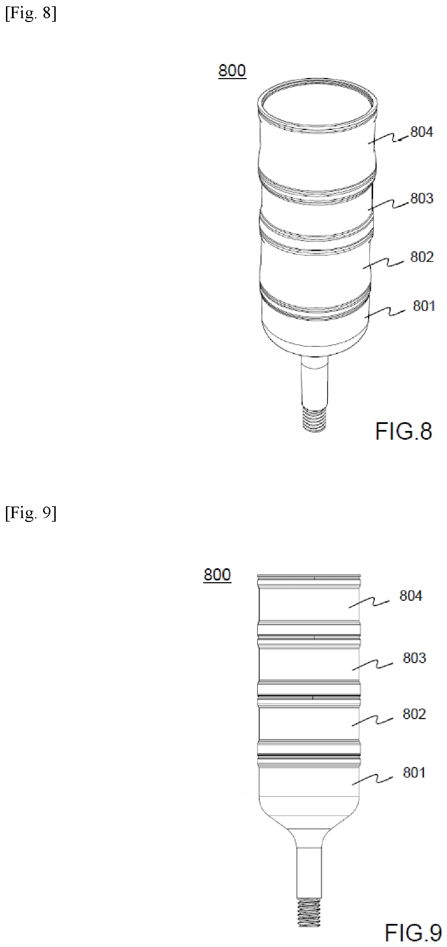

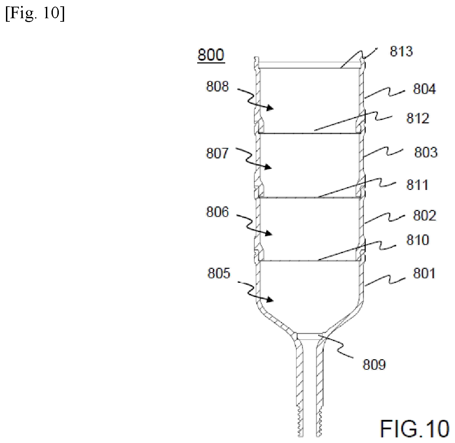

La figure 8, la figure 9, et la figure 10, illustrent schématiquement un troisième mode de réalisation 800 d'une cartouche d'absorption de vapeurs toxiques pouvant se substituer à la cartouche d'absorption 105 dans l'équipement de collecte 100 illustré à la figure 1. La figure 8 présente une vue schématique en perspective de ce troisième mode de réalisation 800 qui sera nommé troisième cartouche évoluée 800 dans ce qui suit pour faciliter la lecture. La figure 9 présente une vue schématique de côté de la troisième cartouche évoluée 800. La figure 10 présente une vue schématique en coupe de la troisième cartouche évoluée 800.

La troisième cartouche évolue 800 comprend un ensemble de quatre modules : un module de base 801 et trois modules complémentaires : un premier module complémentaire 802, un deuxième module complémentaire 803, et un troisième module complémentaire 804. Le module de base 801 et le premier module complémentaire 802 peuvent être respectivement similaires, voire identiques, au module de base 501 est au premier module complémentaire 502 de la deuxième cartouche évoluée 500. Les remarques faites précédemment concernant ce dernier module de base 501 et ce dernier premier module complémentaire 502 peuvent donc également s'appliquer à ce mode de réalisation. Le deuxième module complémentaire 803 peut être monté sur le premier module complémentaire 802 par emboîtage et encliquetage comme décrit dans ce qui précède. Le troisième module complémentaire 804 peut être monté sur le deuxième module complémentaire 803 également de cette manière. Mis à part son positionnement, le troisième module complémentaire 804 peut être similaire, voire identique, au module complémentaire 202 de la première cartouche évoluée 200 et au second module complémentaire 503 de la deuxième cartouche évoluée 500.

La troisième cartouche évoluée 800 comprend quatre compartiments 805, 806, 807, 808, Le module de base 801 incorpore un premier compartiment 805. Le premier module complémentaire 802 incorpore un deuxième compartiment 806. Le deuxième module complémentaire 803 incorpore un troisième compartiment 807. Le troisième module complémentaire 804 incorpore un quatrième compartiment 808. Le premier compartiment 805 est délimité par une barrière poreuse inférieure 809 et une première barrière poreuse intermédiaire 810. Ces barrières poreuses 809, 810 peuvent être respectivement disposées de la même manière que la barrière poreuse inférieure 206 et la barrière poreuse intermédiaire 207 dans la première cartouche évoluée 200. Le deuxième compartiment 806 est délimité par la première barrière poreuse intermédiaire 810 et une deuxième barrière poreuse intermédiaire 811. La deuxième barrière poreuse intermédiaire 811 peut être disposée de la même manière que la deuxième barrière poreuse intermédiaire 509 dans la deuxième cartouche évoluée 500. Le troisième compartiment 807 est délimité par une troisième barrière poreuse intermédiaire 812 et une barrière poreuse supérieure 813. La troisième barrière poreuse intermédiaire 812 se situe dans une partie supérieure du deuxième module complémentaire 803 dans laquelle le troisième module complémentaire 804 s'emboîte. La barrière poreuse supérieure 813 se situe dans une partie supérieure du troisième module complémentaire 804 relativement éloignée du module de base 801. À cet égard également, le troisième module complémentaire 804 peut donc être similaire au module complémentaire 202 dans la première cartouche évoluée 200 et au second module complémentaire 503 dans la deuxième cartouche évoluée 500, comme mentionné dans ce qui précède.

Chacun des quatre compartiments peut contenir un matériau absorbant apte à absorber au moins une partie des vapeurs toxiques. Comme aux figures 4 et 7, ce matériau absorbant n'est pas représenté non plus à la figure 10 par souci de simplicité et clarté. Le matériau absorbant peut comprendre du charbon actif, comme dans la première cartouche évoluée 200 et dans la deuxième cartouche évoluée 500. Les remarques faites dans ce qui précède concernant la première cartouche évoluée 200 et la deuxième cartouche évoluée 500 s'appliquent également. Les quatre compartiments peuvent comprendre le même type de charbon actif. Il est également possible qu'au moins un compartiment comprenne un type de charbon actif différent de celui présent dans les autres compartiments. De nombreuses permutations sont possibles ce qui permet une grande flexibilité quant au charbon actif contenu dans la troisième cartouche évoluée 800.

Une quelconque des barrières poreuses mentionnées dans ce qui précède peut comprendre, par exemple, une plaque frittée utilisée en chromatographie. La barrière poreuse peut présenter une porosité entre, par exemple, 10 µm et 50 µm. La barrière poreuse peut être formée, par exemple, de polyéthène, de polypropylène, de polytétrafluoroéthylène (PTFE), ou tout autre matériau chimiquement inerte. Les barrières poreuses intermédiaires mentionnées dans ce qui précède peuvent être moins épaisses que les barrières poreuses inférieures et supérieures mentionnées dans ce qui précède. Par exemple, une barrière poreuse intermédiaire peut avoir une épaisseur entre 0.1 et 1 mm tandis qu'une barrière poreuse inférieure et une barrière poreuse supérieure peut avoir une épaisseur entre 1 et 10 mm. Il convient que les barrières poreuses inférieures et supérieures soient mécaniquement suffisamment résistantes car elles peuvent subir des forces venant de l'extérieur. Ce n'est généralement pas le cas pour une barrière poreuse intermédiaire.

Une quelconque des barrières poreuses mentionnées dans ce qui précède peut être fixée au module à laquelle elle appartient par encliquetage dans une rainure intérieure circulaire prévue à cet effet. Dans les modes de réalisation présentés, une barrière poreuse intermédiaire appartenant à module est verrouillée davantage par le montage d'un autre module sur celui-ci.

Les cartouches évoluées 200, 500, 800 présentées dans ce qui précède ont en commun les caractéristiques structurelles suivantes. Conformément à ces modes de réalisation, une cartouche comprend un assemblage d'un module de base et d'au moins un module complémentaire. Chaque module de cet assemblage comprend une paroi circonférentielle qui délimite un compartiment interne contenant le matériau absorbant. L'assemblage est formé par la fixation des parois circonférentielles de modules adjacents les unes aux autres. Le module de base comprend des moyens de montage sur un évent d'un contenant, comme, par exemple, l'évent 104 du contenant 101 illustré à la figure 1. Les cartouches évoluées 200, 500, 800 peuvent ainsi se substituer à la cartouche 105.

Les cartouches évoluées présentées dans ce qui précède peuvent être assemblés chez un fabriquant ou un distributeur de cartouches, conjointement désignés fournisseur de cartouches. Le fournisseur de cartouches peut posséder un stock de modules de base et de modules complémentaires. Les modules de base peuvent se décliner en plusieurs variantes, chaque variante comprenant un autre type de charbon actif. De même, les modules complémentaires peuvent se décliner en plusieurs variantes, chaque variante comprenant un autre type de charbon actif. Le fournisseur de cartouches peut présenter un catalogue de cartouches proposant de nombreux modèles de cartouches, chaque modèle correspondant à une combinaison particulière de modules.

Un utilisateur peut commander auprès du fournisseur de cartouches le modèle de cartouche le plus adapté à la collecte des effluents qu'il envisage de mettre en œuvre. Le modèle de cartouche le plus adapté sera celui qui répond aux critères suivants. Le modèle contient une quantité suffisante de charbon actif pour absorber les vapeurs toxiques qui seront libérées tout au long de la collecte d'effluents. De plus, le modèle comporte le type de charbon actif ou, le cas échéant, les types de charbon actif absorbant efficacement les vapeurs toxiques libérées. Le fournisseur de cartouches peut alors livrer rapidement le modèle de cartouche le plus adapté à un prix attractif grâce à la solution modulaire décrite dans la présente.

Les modes de réalisation décrits dans ce qui précède en référence aux dessins sont présentés à titre d'illustration. L'invention peut être mise en œuvre de nombreuses façons différentes. Afin d'illustrer cela, quelques alternatives sont indiquées sommairement.

L'invention peut être mise en œuvre dans de nombreux types de produits et procédés concernant l'absorption de vapeurs toxiques .À titre d'illustration, une mise en œuvre a été décrite qui concerne la collecte d'effluents. D'autres mises en œuvre peuvent concerner d'autres types de substances susceptibles de dégager des vapeurs toxiques devant être absorbées afin d'éviter qu'elles s'échappent à l'air libre.

Il existe de nombreuses façons de mettre en œuvre une cartouche d'absorption de vapeurs toxiques conforme à l'invention. Dans les modes de réalisation présentés, le matériau absorbant comprend du charbon actif. Dans d'autres modes de réalisation, le matériau absorbant peut comprendre une autre substance.

Il existe de nombreuses façons de mettre en œuvre des modules respectifs incorporant des compartiments respectifs dans une cartouche d'absorption de vapeurs toxiques conforme à l'invention. Dans les modes de réalisation présentés, les compartiments sont formés par des barrières poreuses disposées d'une certaine manière dans les modules. Dans d'autres modes de réalisation, des barrières poreuses, ou autres éléments de segmentation, peuvent être disposées différemment. Le nombre de ces éléments peut également varier d'un mode de réalisation à l'autre.

Les remarques qui précèdent montrent que les modes de réalisation décrits en référence aux dessins illustrent l'invention plutôt qu'ils ne la limitent. Les signes de références n'ont aucun caractère limitatif. Le verbe « comprendre » dans une revendication n'exclut pas la présence d'autres éléments ou d'autres étapes que ceux ou celles listés dans la revendication. Il en va de même pour des verbes similaires tel que « comporter » et « inclure ».

## Revendications

1. Cartouche d'absorption de vapeurs toxiques (800), comprenant :
- un assemblage d'un module de base (801) et d'au moins un module complémentaire (802, 803, 804) ;
- où chaque module dudit assemblage comprend une paroi circonférentielle qui délimite un compartiment interne (805, 806, 807, 808) contenant un matériau absorbant ;
- où lesdits modules sont assemblés par la fixation de leurs parois circonférentielles respectives les unes aux autres ; et
où le module de base comprend des moyens de montage sur un évent (104) d'un contenant (101).

2. Cartouche d'absorption de vapeurs toxiques selon la revendication 1, Cartouche d'absorption de vapeurs toxiques selon la revendication 1, dans laquelle l'assemblage comprend plusieurs modules complémentaires (802, 803, 804).

3. Cartouche d'absorption de vapeurs toxiques selon l'une des revendications 1 et 2, dans laquelle la fixation des parois circonférentielles comprend un emboîtement.

4. Cartouche d'absorption de vapeurs toxiques selon l'une des revendications 1 à 3, dans laquelle la fixation des parois circonférentielles est réalisée par encliquetage.

5. Cartouche d'absorption de vapeurs toxiques selon l'une des revendications 1 à 4, dans lequel le matériau absorbant comprend du charbon actif.

6. Cartouche d'absorption de vapeurs toxiques selon la revendication 5, dans lequel le matériau absorbant est un des différents types de charbon actif suivants :
- un charbon actif imprégné d'une substance basique apte à absorber des vapeurs acides organiques et inorganiques,
- un charbon actif imprégné d'une substance acides apte à absorber des vapeurs basiques organiques et inorganiques, et
- un charbon actif sans imprégnation significative apte à absorber des vapeurs de solvants organiques et organo-aqueuses.

7. Cartouche d'absorption de vapeurs toxiques selon la revendication 6, dans lequel l'assemblage comprend un module (801) contenant un type de charbon actif et un autre module (802) comprenant un autre type de charbon actif.

8. Cartouche d'absorption de vapeurs toxiques selon l'une des revendications 1 à 7, dans laquelle le compartiment interne de chaque module est en outre délimité par au moins une barrière poreuse (809, 810).

9. Cartouche d'absorption de vapeurs toxiques selon la revendication 8, dans laquelle la barrière poreuse comprend une plaque frittée.

10. Équipement pour collecter des effluents libérant des vapeurs toxiques, l'équipement comprenant un contenant (101) dans lequel les effluents peuvent s'écouler et une cartouche d'absorption de vapeurs toxiques (800) selon l'une des revendications 1 à 9 monté sur un évent (104) du contenant.

11. Usage d'une cartouche d'absorption de vapeurs toxiques (800) selon l'une des revendications 1 à 9 consistant à monter la cartouche sur un évent (104) d'un contenant (101) destiné à collecter des effluents libérant des vapeurs toxiques.
